Europäisches Patentamt

European Patent Office

Office européen des brevets

(19)

(11) Numéro de publication: **0 136 201**
**B1**

(12) **FASCICULE DE BREVET EUROPEEN**

(45) Date de publication du fascicule du brevet: **18.01.89**

(51) Int. Cl.⁴: **G 02 B 6/38**

(21) Numéro de dépôt: **84401575.0**

(22) Date de dépôt: **26.07.84**

(54) Procédé de raccordement de fibres optiques, et épissure optique obtenue.

(30) Priorité: **08.08.83 FR 8313058**
**16.07.84 FR 8411245**

(43) Date de publication de la demande:
**03.04.85 Bulletin 85/14**

(45) Mention de la délivrance du brevet:
**18.01.89 Bulletin 89/03**

(84) Etats contractants désignés:
**AT BE CH DE FR GB IT LI LU NL SE**

(56) Documents cités:
**EP-A-0 005 792**
**EP-A-0 029 383**
**EP-A-0 072 637**
**GB-A-2 046 466**
**JP-A-52 140 345**
**JP-A-53 010 445**
**US-A-4 109 369**

**PATENTS ABSTRACTS OF JAPAN, vol. 6, no.**
**168 (P-139)1046r, 2 septembre 1982; & JP - A -**
**57 85 015 (NIPPON DENKI K.K.) 27-05-1982**

(73) Titulaire: **ALLIANCE TECHNIQUE INDUSTRIELLE**
**Zone Industrielle de Saint-Guénault 6, rue Jean**
**Mermoz Courcouronnes**
**F-91000 Evry (FR)**

(72) Inventeur: **Malavieille, François-Louis**
**6, rue de Vouillé**
**F-75015 Paris (FR)**

(74) Mandataire: **Bezault, Jean et al**
**Cabinet Netter 40, rue Vignon**
**F-75009 Paris (FR)**

Courier Press, Leamington Spa, England.

EP 0 136 201 B1

## Description

L'invention concerne le raccordement de fibres optiques.

On connaît déjà, pour réaliser cette fonction, les connecteurs de fibres optiques. La présente invention concerne un dispositif d'un genre différent qui a pour but non pas de permettre la connexion amovible à volonté de fibres optiques entre elles mais, au contraire, de réaliser leur interconnexion définitive. Par analogie avec le domaine électrique, on peut considérer que la présente invention vient offrir une sorte d'épissure pour fibres optiques, alors que les connecteurs correspondraient au contraire à la famille des prises de courant.

A cet égard, un premier but de la présente invention est de fournir un procédé raccordement à coût réduit et à mise en oeuvre simplifie, qui est particulièrement intéressant dans l'installation d'un réseau complet de télédistribution par fibres optiques, par exemple. On sait que dans un tel réseau il est nécessaire de raccorder ou de diviser des câbles multi-fibres, dans des boîtes ou armoires de jonction ou de dérivation, ce qui permet à l'exploitant du réseau d'établir ou de modifier des connexions vers différents abonnés.

L'invention a également pour but de résoudre les délicats problèmes de raccordement des fibres bout à bout d'une manière simple, ces problèmes étant essentiellement dus à la fragilité et à la dimension très réduite des fibres. On sait que la tendance actuelle va vers une réduction constante du diamètre de la partie centrale ou "coeur" des fibres optiques.

Une autre difficulté que la présente invention vise á résoudre est le fait que les fibres à raccorder peuvent avoir des diamètres légèrement différents du fait des tolérances de fabrication, de provenance, ou de lots différents. Le raccordement doit demeurer de qualité sensiblement constante, en dépit de ces variations.

Pour résoudre les problèmes ci-dessus, l'invention propose un procédé de raccordement de fibres optiques, comprenant une étape préliminaire de préparation d'au moins deux fibres optiques pour leur raccordement et une étape ultérieure de raccordement des deux fibres optiques au moyen d'un bloc rainuré.

Un procédé de ce genre est connu par le document JP-A-53 10445 qui utilise un bloc rainuré en une matière plastique telle que du styrène pour assurer le raccordement de deux fibres optiques. Pour cela, la matière plastique est ramollie par un solvant pour se mouler autour des fibres, et ensuite durcie dans sa condition ramollie, le bloc étant ainsi solidarisé aux fibres optiques.

Le procédé selon l'invention comporte les étapes suivantes:

a) insérer les extrémités d'au moins deux fibres à raccorder, face à face, dans une rainure empile d'un milieu liquide durcissable transparent, et ménagée sur une surface d'un bloc-support qui, au moins au niveau de ladite surface, est en matériau mou par rapport aux fibres et déformable élastiquement, le milieu liquide durci n'adhérant pas au matériau mou, tout en maintenant une pièce rigide surfacée en appui sur ladite surface du support, ce qui exerce une action de pression sur lesdites fibres, faisant naître une réaction radiale de la paroi de la rainure sur les fibres, assurant l'alignement de celles-ci;

b) produire le durcissement dudit milieu liquide; et

c) séparer la pièce du bloc-support, la plaque emmenant avec elle les deux fibres interconnectées opérativement.

On s'est aperçu en effet qu'il existe des colles capables d'adhérer sélectivement sur les fibres optiques et sur la plaque rigide, mais non sur le support en matériau mou. C'est la raison pour laquelle la plaque emmène avec elle les fibres, qui ont été interconnectées par l'agent de collage durci. Le support en matériau mou a servi de moule pour ces opérations. Il peut être réutilisé par la suite.

Pour améliorer la stabilité thermique du raccordement, il est également prévu dans le cadre de l'invention que, lors du collage, la pièce rigide est sollicitée d'une manière propre à créer une extension de la pièce le long des fibres optiques, cette sollicitation étant interrompue après durcissement du milieu liquide, d'où il résulte une précontrainte.

Dans un mode de réalisation préféré de l'invention, la sollicitation créant l'extension de la pièce consiste en un cintrage de la pièce. Ce cintrage est avantageusement réalisé en maintenant une surface de la pièce, qui est destinée à recevoir les fibres optiques, en appui sur une surface concave du bloc-support.

Il est particulièrement avantageux que, lors du collage, un espace libre empli du milieu liquide soit ménagé entre les extrémités des fibres à raccorder. Il en résulte en effet, après durcissement du milieu liquide, un coussin de colle susceptible d'absorber les légères compressions ou tractions subies par les fibres sous l'effet des variations thermiques.

D'autres caractéristiques et avantages de l'invention apparaîtront à l'examen de la description détaillée qui va suivre, ainsi que des dessins annexés, sur lesquels:

- la figure 1 est une vue en perspective schématique montrant le bloc-support avec sa rainure et la plaque transparente constituant la pièce rigide;

- la figure 2 est une vue schématique montrant la plaque assemblée avec le support, la rainure remplie de colle transparente et les deux extrémités de fibres prêtes à être introduites dans la rainure;

- la figure 3 est une vue schématique montrant le dispositif avec les deux fibres introduites dans la rainure:

- la figure 4 est une vue de dessus schématique montrant l'assemblage des deux fibres dans le dispositif;

- la figure 5 est une vue en coupe longitudinale verticale montrant la jonction, entre les deux fibres, obtenue suivant l'invention.

- la figure 6 est une coupe transversale du dispositif montrant une fibre enfoncée dans la rainure élastique par la plaque supérieure;

- la figure 7 illustre sous la forme d'une vue en perspective le moule ou support en matériau mou servant à la mise en oeuvre de l'invention;

- la figure 8 est une vue en perspective schématique montrant une tablette réunissant les différents éléments nécessaires pour la mise en oeuvre du procédé;

- la figure 9 montre une épissure sur la plaque retournée après démoulage obtenue par le procédé suivant l'invention;

- la figure 10 montre une épissure terminée protégée par un cordon de colle;

- la figure 11 montre un assemblage par empilage et collage de plusieurs épissures suivant l'invention;

- la figure 12 montre une variante de la figure 9 formant épissure pour plusieurs paires de fibres optiques;

- la figure 13 montre schématiquement deux fibres optiques en cours de collage face à face sur une pièce qui est sollicitée d'une manière propre à créer son extension le long des fibres optiquès;

- la figure 14 montre l'assemblage de la figure 13 après que la sollicitation de la pièce a été interrompue;

- la figure 15 est une vue en perspective schématique montrant un bloc-support et une pièce pour la mise en oeuvre du procédé de l'invention;

- la figure 16 est une vue latérale montrant le cintrage de la pièce de la figure 15 sur le bloc-support de la figure 15;

- la figure 17 est une vue en perspective montrant une tablette réunissant les différents éléments nécessaires à la mise en oeuvre du procédé de l'invention, ainsi qu'un microscope permettant de surveiller l'opération de raccordement:

- la figure 18 est une vue en perspective montrant, à échelle agrandie, la tablette de la figure 17; et

- la figure 19 montre une épissure optique conforme à l'invention, qui a été disposée sur une barrette de support.

La technique des fibres optiques fait à de nombreux titres intervenir des formes. A cet égard, les dessins annexés sont à considérer comme faisant partie intégrante de la présente description, pour contribuer autant que nécessaire à la définition de l'invention et à la suffisance de la description de celle-ci.

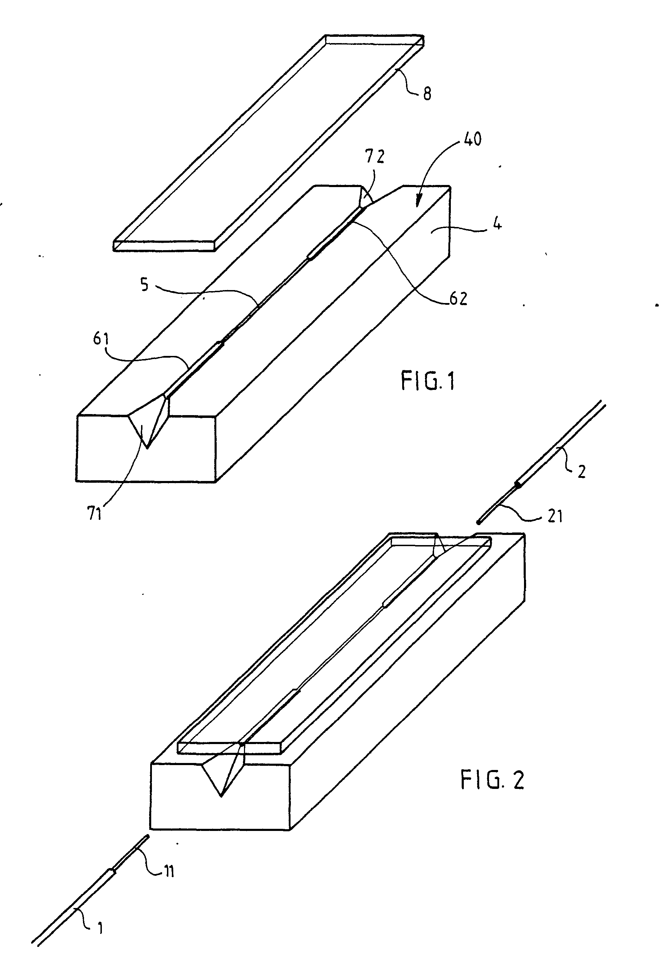

Sur l'ensemble des figures 1 à 12, on utilise des notations communes pour définir les deux fibres optiques à interconnecter, et la rainure qui les associe. Les deux fibres portent les références générales 1 et 2 et leurs extrémités préparées en vue du raccordement sont désignées par 11 et 21. En principe, le point de contact des deux extrémités des fibres n'est pas représenté, étant observé qu'il n'est d'ailleurs pas visible en pratique.

Comme précédemment indiqué, le procédé de l'invention commence par l'etape préliminaire consistant à préparer les extrémités de deux fibres. Pour cela, on enlève la gaine plastique de protection des fibres à leurs extrémités, et on fracture les extrémités des fibres pour obtenir des faces frontales à raccorder qui soient planes, perpendiculaires à l'axe de la fibre, et à surface du type brillant miroir. L'enlèvement de la gaine d'une fibre optique est considéré comme connu de l'homme de l'art. L'obtention de faces frontales planes perpendiculaires et à surface brillant miroir peut se faire par application des enseignements de la Demande de brevet français 78 09703 de la Demanderesse, pûbliée sous le N° 2 422 604.

Le procédé selon l'invention fait usage d'un support en matériau mou par rapport aux fibres, et deformable élastiquement, désignée généralement par 4. Ce support 4 comporte une surface supérieure désignée par 40, dans laquelle est pratiquée au moins une rainure notée 5 (figure 1).

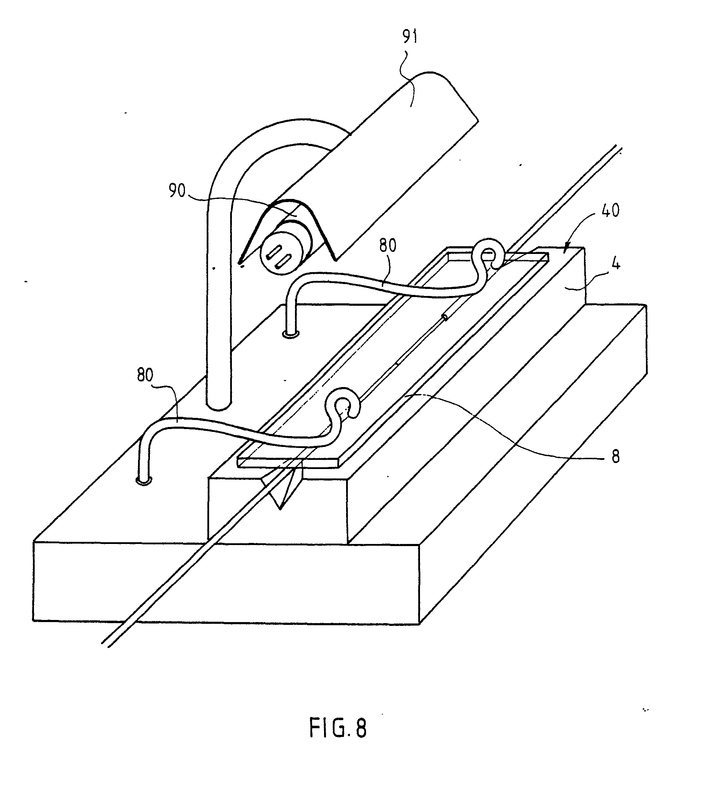

Par des moyens tels que des dispositifs de serrage à ressort ou à genouillère notés 80 sur la figure 8, une pièce rigide surfacée notée 8 est maintenue en appui sur la surface 40 du support 4.

La rainure 5 du support 4 possède une forme complexe, que l'on voit mieux sur les figures 1, 5 et 7.

La partie centrale de la rainure possède une section droite en forme de V, en vue du logement de l'extrémité préparée d'une fibre optique. Dans la suite, la référence numérique 5 ne désigne que cette partie centrale.

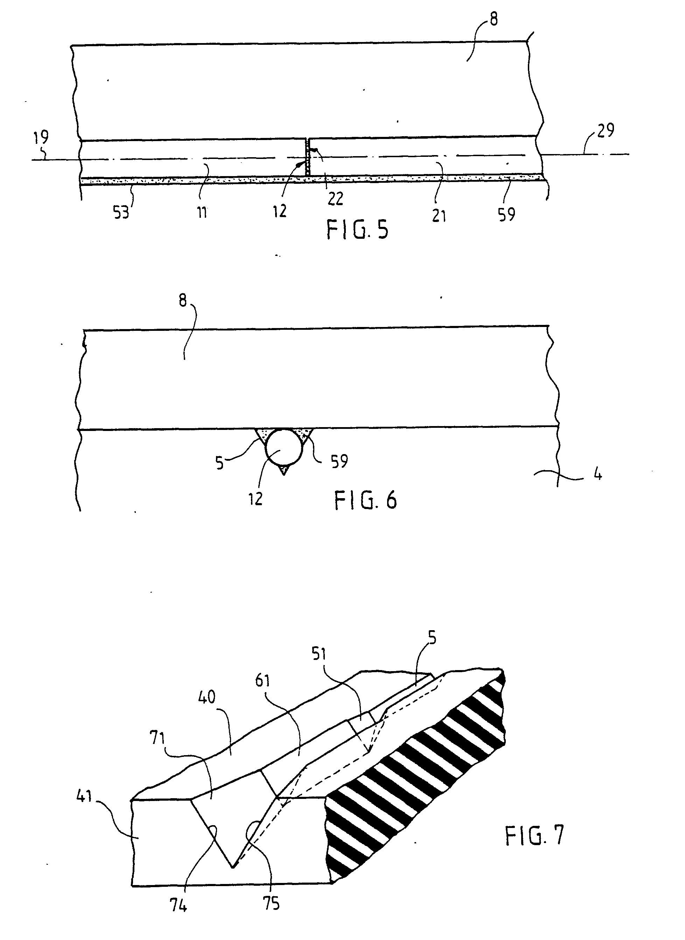

Sur les figures 1 et 7, la partie centrale de la rainure droite est visible en partie. Lorsqu'elle est fermée par la plaque plane 8, cette partie centrale 5 peut être considérée comme une surface prismatique, dont la section droite est approximativement un triangle équilatéral. D'autres formes de la partie centrale de la rainure peuvent convenir. Sa section droite peut présenter une forme polygonale, symétrique ou asymétrique par rapport à une perpendiculaire à la surface supérieure 40; tout ou partie des segments du polygone ou du V peuvent être curvilignes, concaves ou convexes. La section droite de la rainure peut encore être entièrement curviligne.

Il est simplement nécessaire que les réactions radiales sur la fibre, du fait de la rainure, s'équilibrent avec l'effort radial dû à l'appui de la pièce 8.

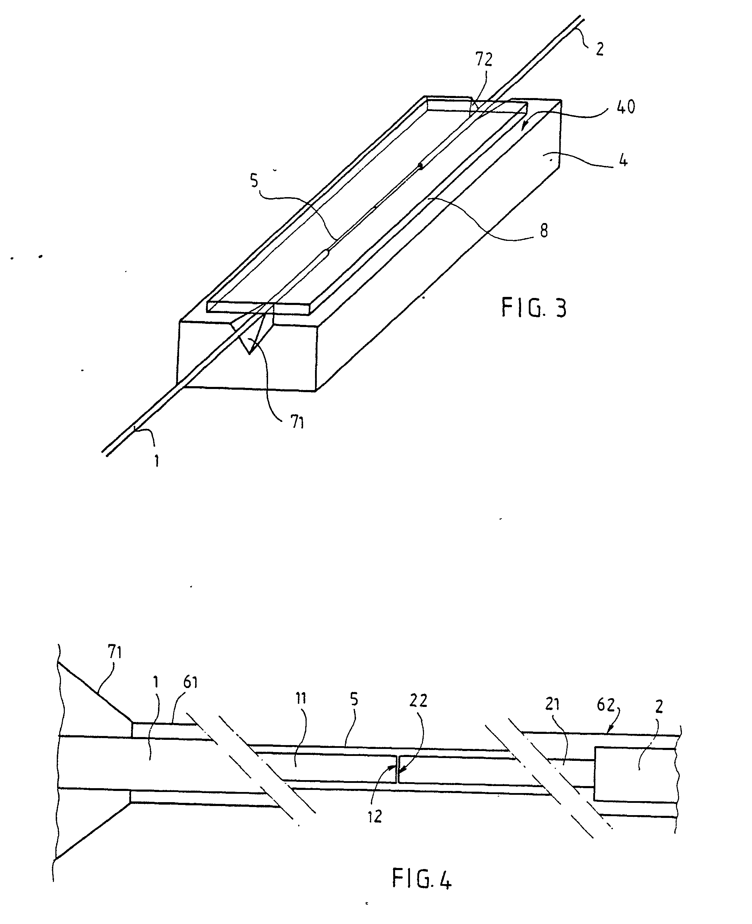

La partie centrale 5 se prolonge de part et d'autre, et en alignement sur son axe, selon deux parties latérales de section droite plus importante, adaptée aux dimensions d'ensemble de la fibre avec sa gaine. On voit en 61, sur les figures 1 et 7, l'une de ces parties latérales, ainsi que la transition 51 entre la rainure 5 et sa partie latérale 61. L'autre partie latérale est visible en 62 sur les figures 1 et 4.

. Enfin, aux extrémités du support en matériau mou 4, la rainure se termine par des embouchures évasées 71 et 72 (figures 1 et 3) possédant une forme pyramidale et une section droite en V, définie par deux flancs 74 et 75. Les embouchures peuvent également présenter une forme conique.

Avant la mise en place de la plaque 8 sur le support 4, on dépose dans la ou les rainures de celui-ci une quantité suffisante d'un milieu liquide durcissable transparent. Ce dernier peut avantageusement former adaptateur d'indice.

Les extrémités préparées 11 et 21 des fibres optiques 1 et 2 sont alors insérées dans la rainure, à partir des deux extrémités de celles-ci, de sorte que les faces frontales 12 et 22 des fibres viennent au contact face à face.

Le liquide durcissable contenu dans la rainure baigne les deux extrémités des fibres, son indice de réfraction proche de celui de la silice des fibres améliore la transmission lumineuse entre les deux fibres en atténuant les sauts d'indice des dioptres de séparation.

On a remarqué par ailleurs que le milieu liquide adaptateur d'indice réalise egalement un auto-nettoyage de la zone comprise entre les deux faces frontales des fibres, à savoir 12 et 22 (figure 4) compte tenu de l'effet de piston produit par les deux fibres dans la rainure 5 fermée par la plaque 8 pendant leur mouvement relatif d'introduction.

On observe que la coopération de la plaque rigide 8 et du support en matériau mou 4 avec l'extrémité des fibres consiste en l'exercice d'une action de pression sur les extrémités des fibres, perpendiculairement à la surface 40 du support 4, ce qui fait naître une réaction, radialement de la fibre, de la paroi de la rainure 5 sur les extremites des fibres, et assure l'alignement de celles-ci.

L'étape suivante du procédé selon l'invention consiste à produire le durcissement du milieu liquide. De preference, la plaque 8 est en verre, et le milieu liquide adaptateur d'indice est une colle durcissable sous l'effet d'un rayonnement auquel la plaque rigide est transparente, de préférence d'un rayonnement ultraviolet.

Comme le montre la figure 8, l'étape de durcissement du milieu liquide s'effectue alors par une simple application d'un rayonnement ultraviolet à la rainure 5, ainsi qu'à ses parties latérales, à travers la plaque de verre 8, à l'aide d'une lampe U.V. notée 90, placée au-dessus de l'ensemble avec abat-jour protecteur 91.

On peut alors séparer la plaque de verre 8 du support 4, et la plaque emmène avec elle les deux fibres interconnectées opérativement. Il a été observé en effet qu'un choix convenable des matériaux permet d'éviter toute adhésion du milieu liquide durci avec le support en matériau mou 4.

La figure 5 montre l'état final de la plaque 8 supportant les extrémités 11 et 21 des fibres, qui lui sont collées par le milieu adaptateur d'indice durci illustré en 59. Elle montre également l'excellent alignement entre les axes optiques 19 et 29 des deux fibres. On a illustré en 53 le sommet de la forme de collage laissée par le fond de la rainure 5 ménagée dans le moule 4.

Bien que différentes formes du support ou moule 4 puissent être envisagées, il est actuellement considéré comme préférable que ce support possède une forme générale prismatique, avec une génératrice sensiblement parallèle à la direction de la rainure. Le mode de réalisation le plus avantageux du support est une forme générale de parallélépipède rectangle.

On donnera maintenant in exemple particulier d'application de l'invention.

EXEMPLE 1

Deux fibres de diamètre de 125 µm ont été préparées comme décrit dans la Demande de brevet français 78 09703 déjà citée.

Un bloc 4 de matériau mou, parallélépipédique, a été construit dans un élastomère de silicone. La préparation de ce bloc s'effectue par moulage.

La rainure ménagée dans ce bloc 4 possédait la forme de la figure 7, avec en sa partie centrale 5, les dimensions suivantes: rainure en V à angle au sommet de 60°, et de O,17 mm de hauteur.

Dans l'ensemble de la rainure, parties latérales 61 et 62 et embouchures 71 et 72 comprises, on a disposé quelques gouttes d'une colle liquide polymérisable aux rayonnements ultraviolets; comme la colle commercialisée sous la Marque "Glass Bond" par la société LOCTITE.

On a ensuite appliqué une plaque de verre d'épaisseur 1 mm sur la surface supérieure 40 du support 4.

Les fibres ont alors été insérées de part et d'autre dans la rainure pour venir en contact étroit l'une avec l'autre. La qualité de ce contact peut être contrôlée in situ par observation visuelle sous loupe binoculaire à travers la plaque de verre.

Après contrôle, un rayonnement ultraviolet a été appliqué au milieu liquide adaptateur d'indice, à travers la plaque de verre 8, par la lampe 90 (figure 8).

Après durcissement, la plaque de verre a été désolidarisée du support ou moule 4. Il s'est avéré qu'elle emmenait avec elle les deux fibres optiques ainsi que le milieu adaptateur d'indice durci. De son côté, la rainure 5 ménagée dans le moule 4 et ses parties latérales se sont avérées parfaitement propres, donc susceptibles de servir à nouveau pour l'interconnexion de deux fibres optiques avec une autre plaque de verre.

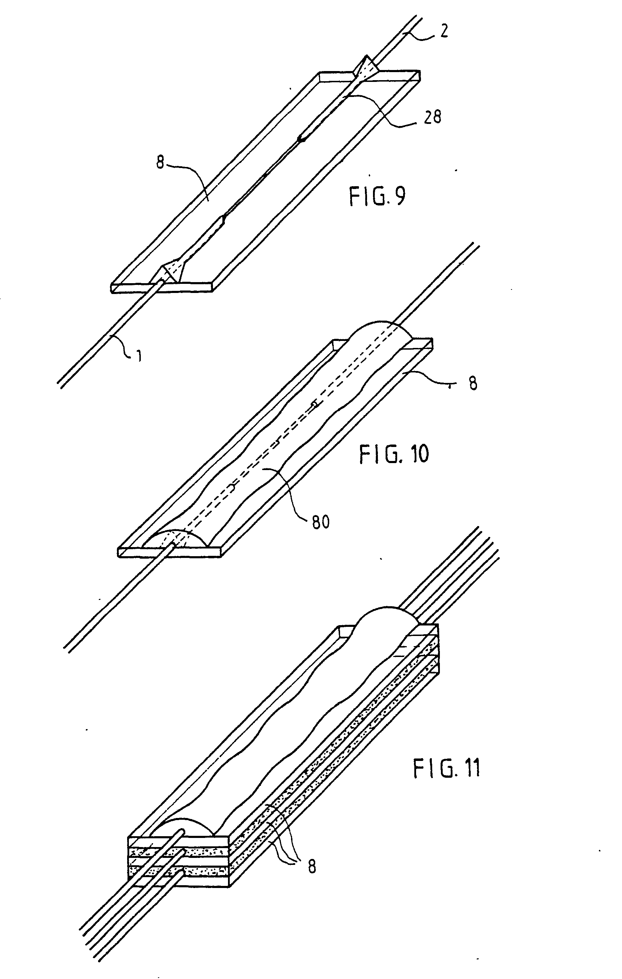

La forme générale du dispositif ou épissure optique obtenu par la mise en oeuvre du procédé est illustrée sur la figure 9. On y voit la plaque de verre 8, surmontée par les deux fibres 1 et 2, noyées dans une forme prismatique 28 à section droite triangulaire reproduisant celle de la rainure.

Une telle épissure optique peut être utilisée de différentes manières. On peut par exemple noyer la forme 28 dans une résine 80 (figure 10), assurant la protection de l'assemblage. L'ensemble peut alors être gainé par des capuchons protecteurs de divers matériaux plastique ou métalliques.

Bien d'autres variantes peuvent être envisagées, notamment la réalisation de "sandwichs" de plaques 8-l à 8-n-, collées les unes sur les autres par des résines telles que 80, et inter- connectant entre elles des fibres optiques 1-1 à 1-n d'une part, et 2-1 à 2-n d'autre part. Cela est illustré schématiquement sur la figure 11.

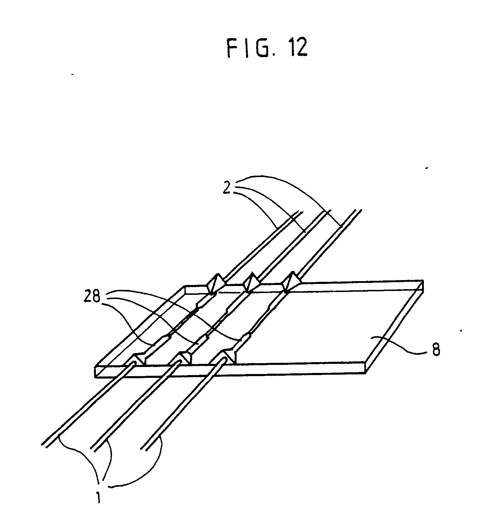

Une autre variante serait la réalisation de plusieurs épissures sur une même plaque à l'aide d'un moule à plusieurs rainures, comme montré sur la figure 12.

Pour tester le bon positionnement relatif des deux fibres à interconnecter, avant de provoquer le durcissement du milieu adaptateur d'indice, on peut appliquer des rayonnements lumineux aux deux fibres, par injection en bout, ou latérale, à travers leur enveloppe. Une telle injection de lumière permet en effet de produire un point lumineux sur les faces frontales respectives 12 et 22 de deux fibres. Lorsqu'elles sont bien en contact, le point lumineux s'atténue sensiblement, ou disparaît.

Une variante consiste à colorer latéralement les parties d'extrémités dénudées des fibres, comme décrit dans la Demande de certification d'addition français NO 83 06499. On peut alors suivre aisément le cheminement de la fibre ainsi colorée à l'intérieur de la rainure 5.

Dans ce qui précède, on a décrit le durcissement de la colle par application d'un rayonnement ultraviolet à travers la plaque de verre 8. Une variante simple de l'invention consisterait à prévoir un support mou, ou moule 4, qui soit de lui-même transparent au rayonnement ultraviolet, tirant parti ici de la transparence de certaines résines silicones aux rayonnements ultraviolets. En pareil cas, le rayonnement ultraviolet pourrait être appliqué à travers le support 4, et la plaque 8 pourrait être non transparente, et réalisée en un matériau autre que le verre, métallique par exemple.

D'autres variantes de l'invention consisteraient à choisir un milieu adaptateur d'indice qui soit durcissable en réponse à d'autres agents que le rayonnement ultraviolet.

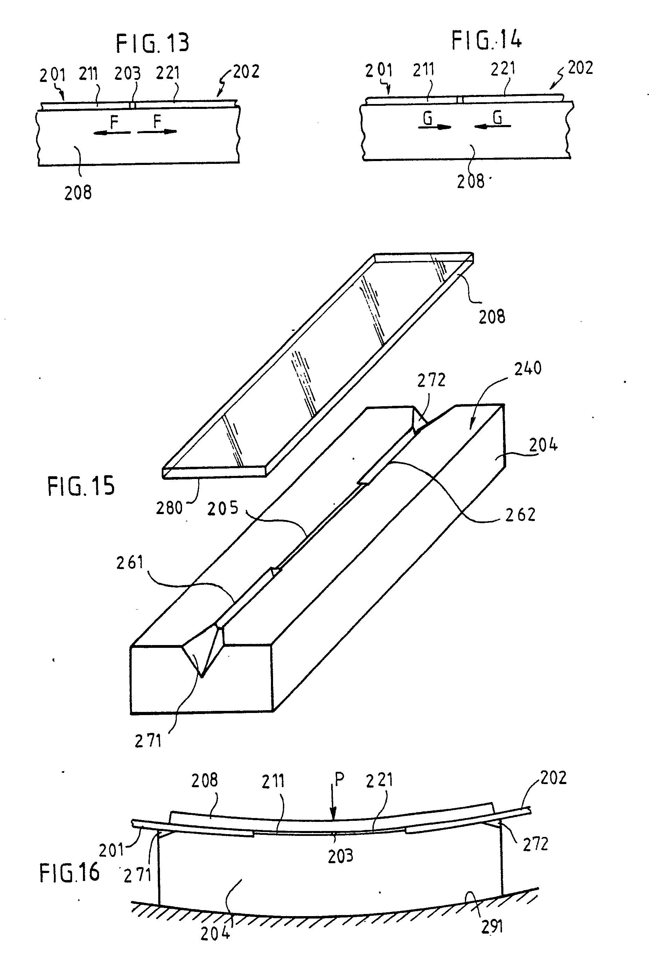

On se réfère maintenant aux figures 13 à 19 relatives à une variante de réalisation du procédé de l'invention.

Sur l'ensemble des figures 13 à 19, les deux fibres optiques raccordées portent les références générales 201 et 202 et leurs extrémités préparées en vue du raccordement sont désignées par 211 et 221.

Cette variante du procédé commence par une étape préliminaire consistant à préparer les extrémités des deux fibres, selon la méthode indiquée précédemment.

Les caractéristiques fondamentales de cette variante du procédé de l'invention seront d'abord expliquées en référence aux figures 13 et 14.

Les extrémités 211 et 221 des fibres optiques préalablement préparées en vue de leur raccordement sont collées face à face sur une pièce rigide 208, formant pièce de liaison, au moyen d'un milieu liquide durcissable transparent qui peut avantageusement former adaptateur d'indice. De préférence, la pièce de liaison est constituée par une plaque en verre et le milieu liquide durcissable est une colle durcissable sous l'effet d'un rayonnement auquel la pièce de liaison est transparente, de préférence d'un rayonnement ultraviolet.

Comme représenté sur la figure 13, lors du collage, la pièce de liaison 208 est sollicitée d'une manière propre à créer une extension de cette pièce le long des fibres optiques. Cette sollicitation en extension est représentée schématiquement par les flèches F. Après durcissement du milieu liquide et collage des extrémités des fibres sur la pièce de liaison 208, la sollicitation est interrompue, d'où il résulte une précontrainte comme représenté par les flèches G.

Il est particulièrement avantageux que, lors du collage, un espace libre 203 empli du milieu liquide soit ménagé entre les extrémités des fibres à raccorder. Cet espace libre doit avoir une longueur choisie qui est de préférence inférieure au diamètre des fibres optiques. A titre d'exemple, on pourra choisir une longueur comprise entre le dixième et la moitié du diamètre des fibres optiques.

Ainsi, une fois le collage terminé et la sollicitation in 25 terrompue, la précontrainte s'exercera sur un coussin de colle qui sera à même d'absorber les légères compressions ou tractions subies par les fibres optiques, par exemple sous l'effet de variations de température.

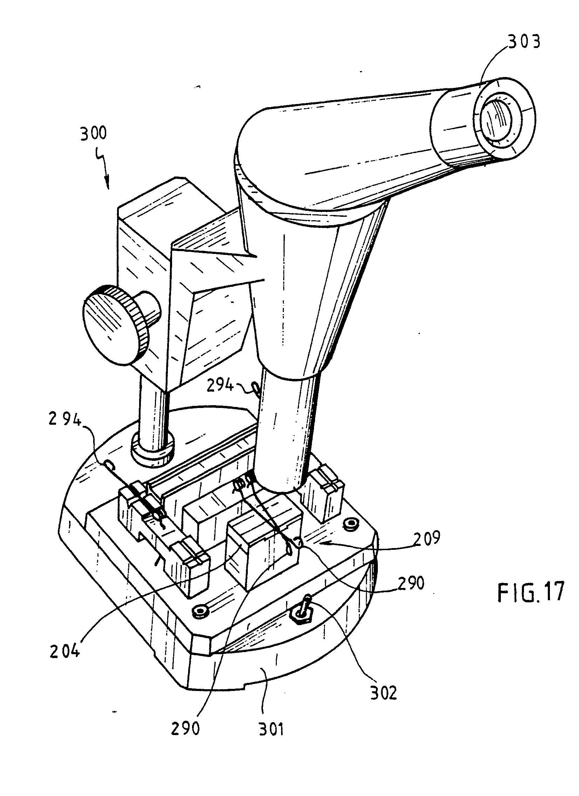

La sollicitation propre à créer l'extension de la pièce de liaison 208 est avantageusement réalisée sous la forme d'un cintrage de cette pièce de liaison, comme représenté plus particulièrement sur les figures 15 et 16.

La pièce de liaison 208 est constituée par une plaque de verre, de forme générale rectangulaire, dont la face inférieure 281 est destinée à recevoir par collage les extrémités 211 et 221 des fibres optiques 201 et 202. On réalise le cintrage de la pièce de liaison 208 en maintenant la surface 281 de cette pièce en appui sur une surface concave 240 d'un bloc-support 204. Ce support est réalisé en un matériau mou par rapport aux fibres, et déformable élastiquement, par exemple réalisé en élastomère. La surface 240 est munie d'au moins une rainure 205 (figure 15).

Le bloc-support 204 est réalisé de la manière générale décrite précédemment, mais la surface 240 est ici rendue concave par déformation du bloc-support.

De même que pour la rainure 5, la partie centrale de la rainure 205 possède une section droite en forme de V, en vue du logement de l'extrémité préparée d'une fibre optique. Lorsque cette partie centrale est fermée par la pièce de liaison 208, qui est maintenue en appui contre la surface 240 (figure 16), la section droite de la rainure affecte approximativement la forme d'un triangle équilatéral. Bien entendu, d'autres formes de la partie centrale de la rainure peuvent convenir, comme indiqué plus haut pour la rainure 5.

La partie centrale 205 se prolonge de part et d'autre par deux parties latérales 261 et 262 de section droite plus importante, adaptée aux dimensions d'ensemble de la fibre avec sa gaine.

Enfin, aux extrémités du support 204, la rainure se termine par des embouchures évasées 271 et 272 possédant une forme pyramidale et une section droite en V.

Avant de mettre la pièce de liaison 208 en appui sur le support 204, on dépose dans la ou les rainures de celui-ci une quantité suffisante d'un milieu liquide durcissable transparent. Ensuite, on applique la surface 280 de la pièce de liaison 208 contre la surface supérieure 240 du bloc-support 204. Pour ce faire, on exerce le maintien en appui sur une région centrale de la pièce de liaison, comme représenté schématiquement par la flèche P sur la figure 16. Les extrémités préparées 21l et 221 des fibres optiques 201, et 202 sont alors insérées dans la rainure, à partir des deux extrémités de celles-ci, de sorte que les faces frontales des fibres viennent au contact face à face. Même si l'on désire ménager un espace libre de longueur choisie entre les faces frontales des fibres, il est préférable de mettre d'abord les extrémités des fibres en contact puis de les écarter pour obtenir l'espace libre de longueur choisie.

L'étape suivante du procédé consiste à produire le durcissement du milieu liquide qui, dans le mode de réalisation préféré de l'invention, s'effectue au moyen d'un rayonnement ultraviolet à l'aide d'une lampe UV appropriée. Lorsque le durcissement est achevé, on interrompt la sollicitation exercée sur la pièce de liaison 208, c'est-à-dire qu'on supprime la force P produisant le cintrage de la pièce de liaison. Il en résulte que la surface 280 de la pièce de liaison, qui avait adopté une forme convexe, tend à revenir vers sa forme plane initiale. Il en résulte ainsi une précontrainte qui tend à améliorer le contact entre les faces frontales des fibres par l'intermédiaire du coussin de colle durcie.

Pour mettre en oeuvre le procédé de l'invention, on utilise avantageusement, comme représenté sur la figure 17, une tablette 209 sur laquelle est fixé le bloc-support 204. La tablette 209 est disposée sur la platine 301 d'un microscope 300 destiné à permettre de surveiller l'opération de raccordement. A cet effet, le bloc-support est réalisé en un matériau transparent et est éclairé par une source d'éclairage, qui est ici la source d'éclairage du microscope 300. L'éclairage est commandé par un interrupteur 302 prévu sur la platine du microscope. Le microscope 300 est muni d'un oculaire 303 avec réticule gradué, ce qui permet de choisir à volonté la longueur de l'espace libre compris entre les extrémités respectives des deux fibres à raccorder.

La tablette 209 est par ailleurs pourvue de deux dispositifs de serrage à ressort ou à genouillère 290 qui sont destinés à appliquer la région centrale de la pièce de liaison 208 contre la surface supérieure 240 du bloc-support 204. La surface 240 est rendue concave par déformation du bloc-support contre une surface d'appui 291 de la tablette lors du maintien en appui de la pièce de liaison 208 (figure 16).

Une fois que les fibres à raccorder ont été introduites dans la ou les rainures du bloc-support et que la longueur de l'espace libre entre les extrémités respectives des deux fibres a été réglée sous surveillance du microscope, on procède au durcissement du milieu liquide transparent au moyen d'une lampe UV. Pour ce faire, on enlève ou on fait tourner le corps du microscope par rapport à la platine et on dispose au-dessus du bloc-support la lampe UV destinée à réaliser le durcissement. Une fois le durcissement terminé, on libère les dispositifs de serrage 290 et on sépare la pièce de liaison 208 du support 204, la pièce 208 emmenant avec elle les deux fibres interconnectées opérativement.

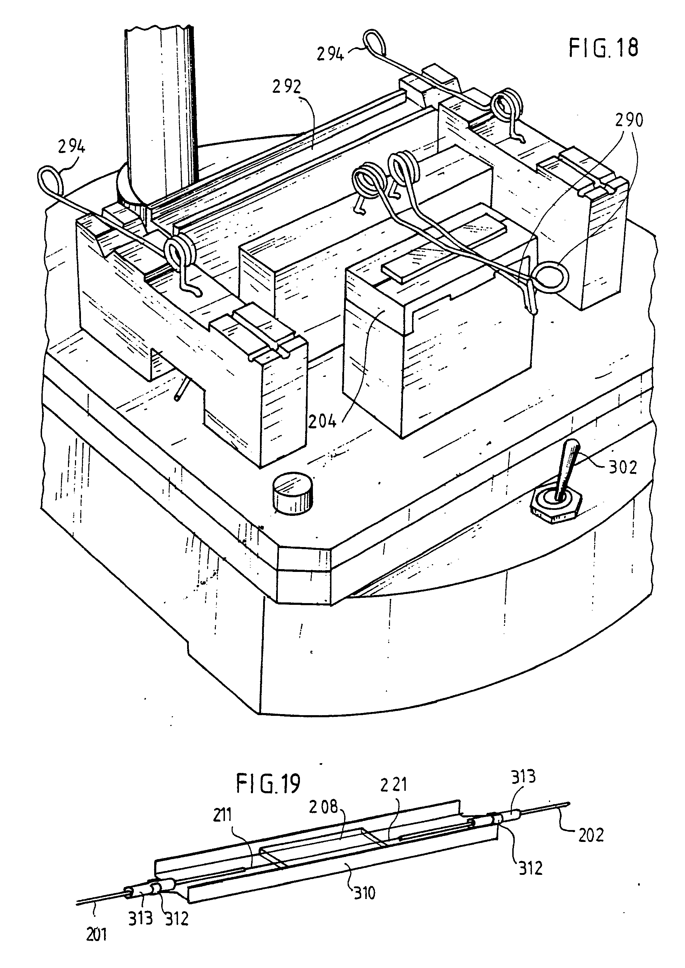

La pièce de liaison 208 et les fibres optiques 201 et 202 peuvent être mises en place dans une barrette 310 telle que représentée sur la figure 19. Cette barrette présente un corps métallique allongé ayant une section droite en forme générale de U qui se termine à chacune de ses extrémités par une griffe 312 susceptible de maintenir la fibre optique 201 ou 202 par l'intermédiaire d'un manchon en caoutchouc 313. La pièce de liaison 208 est collée par sa face 280 dans le fond de la barrette 310 tandis que les fibres optiques 201 et 202 sont insérées dans les manchons 313, lesquels sont maintenus par des pinces de serrage 312. La tablette 209 est munie de moyens aptes à permettre la mise en place de la pièce de liaison et des deux fibres optiques dans la barrette 310 précitée. Ces moyens sont constitués par une rainure horizontale 292, dont la section transversale intérieure correspond à la section transversale extérieure de la barrette 310 et par deux pinces de serrage 294, lesquelles sont destinées à maintenir les deux fibres optiques pendant le collage de la pièce de liaison 208 dans le fond de la barrette 310.

On donnera maintenant un autre exemple particulier d'application de l'invention.

EXEMPLE 2

Deux fibres optiques d'un diamètre de 125 microns ont été préparées comme décrit dans la Demande de brevet français No 78 09703 déjà citée.

On utilise un bloc-support réalisé en un matériau mou, tel qu'un élastomère de silicone transparent.

La rainure ménagée dans le bloc 204 possède dans sa partie centrale 205 les dimensions suivantes: rainure en V à angle au sommet de 60° et de 0,17 mm de hauteur.

Dans l'ensemble de la rainure, on a disposé quelques gouttes d'une colle liquide polymérisable au rayonnement ultraviolet comme la colle commercialisée sous la Marque "Glass Bond" par la société LOCTITE.

On a ensuite appliqué une plaque de verre de 25 mm de long, 5 mm de largeur et 1 mm d'épaisseur. La plaque de verre a été maintenue dans sa partie centrale contre la surface supérieure concave du bloc-support, au moyen de dispositifs de serrage aptes à exercer une pression de 300 à 400 g. On a ensuite inséré les deux fibres à raccorder par les deux extrémités de la rainure jusqu'à ce que leurs faces frontales viennent en contact. On a ensuite écarté les deux faces frontales de manière à obtenir un espace libre d'une longueur choisie entre 12 et 40 microns, en surveillant avec le microscope.

Après durcissement, la pièce de liaison a été désolidarisée du support et il s'est avéré qu'elle emmenait avec elle les deux fibres, optiques ainsi que le milieu liquide durci. L'ensemble a été ensuite collé et fixé sur une barrette comme représenté à la figure 19.

D'autres variantes de réalisation peuvent être envisagées comme indiqué précédemment pour le procédé décrit en référence aux figures 1 à 12.

## Revendications

1. Procédé de raccordement de fibres optiques, comprenant une étape préliminaire de préparation d'au moins deux figures optiques pour leur raccordement et une étape ultérieure de raccordement des deux fibres optiques au moyen d'un bloc rainuré, caractérisé par les étapes suivantes:

a) insérer les extrémités (11, 12) d'au moins deux fibres à raccorder (1, 2), face à face, dans une rainure (5) emplie d'un milieu liquide durcissable transparent, et ménagée sur une surface (40) d'un bloc-support (4) qui, au moins au niveau de ladite surface, est en matériau mou par rapport aux fibres et déformable élastiquement, le milieu liquide durci n'adhérant pas au matériau mou, tout en maintenant une pièce rigide surfacée (8) en appui sur ladite surface (40) du support, ce qui exerce une action de pression sur lesdites fibres, faisant naître une réaction radiale de la paroi de la rainure sur les fibres, assurant l'alignement de celles-ci;

b) produire le durcissement dudit milieu liquide; et

c) séparer la pièce (8) du bloc-support, la pièce (8) emmenant avec elle les deux fibres interconnectées opérativement par collage.

2. Procédé selon la revendication 1, caractérisé en ce que le milieu transparent est durcissable sous l'effet d'un rayonnement à l'égard duquel le bloc-support ou la pièce est transparent, en particulier d'un rayonnement ultraviolet.

3. Procédé selon l'une des revendications précédentes, caractérisé en ce que le bloc-support (4) est de forme générale prismatique avec une génératrice sensiblement parallèle à la direction de la rainure.

4. Procédé selon l'une des revendications 1 à 3, caractérisé en ce que la rainure (5) comporte une partie centrale de section droite propre à loger une fibre optique préparée, et, de part et d'autre et en alignement sur celle-ci, deux parties latérales (61, 62) de section droite plus importante, adaptée aux dimensions d'ensemble de la fibre avec sa gaine.

5. Procédé selon la revendication 4, caractérisé en ce que l'extrémité libre (71, 72) des parties latérales de la rainure est conformée en embouchure évasée.

6. Procédé selon l'une des revendications 1 à 5, caractérisé en ce que la rainure est à section transversale en V.

7. Procédé selon l'une des revendications précédentes, caractérisé en ce que le bloc-support comprend une multiplicité de rainures.

8. Procédé selon l'une des revendications précédentes, caractérisé en ce que, lors du collage, la pièce (208) est sollicitée d'une manière propre à créer une extension de la pièce le long des fibres optiques (201, 202), cette sollicitation étant interrompue après durcissement du milieu liquide, d'où il résulte une précontrainte.

9. Procédé selon la revendication 8, caractérisé en ce que la sollicitation créant l'extension de la pièce (208) consiste en un cintrage de ladite pièce.

10. Procédé selon la revendication 9, caractérisé en ce que le cintrage de la pièce (208) est réalisé en maintenant une surface (280) de la pièce (208), qui est destinée à recevoir les fibres optiques (201, 202) en appui sur une surface concave du bloc-support (204).

11. Procédé selon la revendication 10, caractérisé en ce que la surface concave (240) est obtenue par déformation du bloc-support (204) lors du maintien en appui de la pièce de liaison (208).

12. Procédé selon l'une des revendications 10 et 11, caractérisé en ce que le maintien en appui est exercé sur une région centrale de la pièce (208).

13. Procédé selon l'une des revendications 10 à 12, caractérisé en ce que le bloc-support (204) est éclairé par une source d'éclairage.

14. Procédé selon l'une quelconque des revendications 8 à 13, caractérisé en ce que, lors du collage, un espace libre (203) empli du milieu liquide est ménagé entre les extrémités (211, 212) des fibres (201, 202).

15. Procédé selon la revendication 14, caractérisé en ce que l'espace libre a une longueur choisie entre le dixième et la moitié du diamètre des fibres optiques (201, 202).

16. Procédé selon l'une quelconque des revendications 14 et 15, caractérisé en ce que les extrémités (211, 212) des fibres optiques (201, 202) à raccorder sont d'abord mises en contact puis écartées pour obtenir l'espace libre (203) de longueur choisie.

17. Procédé selon l'une des revendications 1 à 16, caractérisé en ce que le milieu liquide durcissable transparent forme adaptateur d'indice.

## Patentansprüche

1. Verfahren zur Verbindung von optischen Fasern mit einer einleitenden Stufe zur Vorbereitung von wenigstens zwei optischen Fasern für ihre Verbindung und einer nachfolgenden Stufe zur Verbindung der beiden optischen Fasern mittels eines Nutenblockes, dadurch gekennzeichnet, dass es die folgenden Verfahrensschritte umfasst:

a) Einlegen der Enden (11, 12) von wenigstens zwei stirnseitig miteinander zu verbindenden Fasern (1, 2) in eine Nute (5), die mit einem aushärtbaren, transparenten flüssigen Medium ausgefüllt und in einer Oberfläche (40) eines Trägerblockes (4) angebracht ist, der zumindest auf der Ebene der genannten Oberfläche aus einem im Vergleich zu den Fasern weichen und elastisch verformbaren Werkstoff besteht, wobei das ausgehärtete flüssige Medium nicht an dem weichen Werkstoff anhaftet, aber gleichzeitig ein starres, oberflächenbehandeltes Teil (8) in Anlage auf der genannten Fläche (40) des Trägers gehalten wird, wodurch ein Druck auf die genannten Fasern ausgeübt wird, der eine radiale Reaktion der Nuten wand auf die Fasern einleitet und die Ausrichtung derselben gewährleistet;

b) Herbeiführung der Aushärtung des genannten flüssigen Mediums, und

c) Trennung des Teiles (8) von dem Trägerblock, wobei das Teil (8) die beiden verfahrensmässig miteinander verbundenen Fasern mitnimmt.

2. Verfahren nach Anspruch 1, dadurch gekennzeichnet, dass das transparente Medium unter Einwirkung einer Strahlung, insbesondere einer ultravioletten Strahlung, aushärtbar ist, für welche der Trägerblock oder das Teil transparent ist.

3. Verfahren nach einem der vorstehenden Ansprüche, dadurch gekennzeichnet, dass der Trägerblock (4) eine allgemein prismatische Form mit einer zur Nutrichtung wesentlich parallelen Mantellinie aufweist.

4. Verfahren nach einem der vorstehenden Ansprüche 1 bis 3, dadurch gekennzeichnet, dass die Nute (5) einen mittleren Abschnitt mit einem Querschnitt zur Aufnahme einer vorbehandelten optischen Faser und, beiderseits davon und damit fluchtend, zwei seitliche Abschnitte (61, 62) mit einem grösseren Querschnitt aufweist, der den Gesamtabmessungen der Faser mit ihrer Umhüllung angepasst ist.

5. Verfahren nach Anspruch 4, dadurch gekennzeichnet, dass das freie Ende (71, 72) der Seitenabschnitte der Nute als ausgeweitete Mündung ausgebildet ist.

6. Verfahren nach einem der vorstehenden Ansprüche 1 bis 5, dadurch gekennzeichnet, dass die Nute einen V-förmigen Querschnitt aufweist.

7. Verfahren nach einem der vorstehenden Ansprüche, dadurch gekennzeichnet, dass der Trägerblock eine Mehrzahl von Nuten umfasst.

8. Verfahren nach einem der vorstehenden Ansprüche, dadurch gekennzeichnet, dass bei dem Verkleben das Teil (208) derart belastet wird, dass das Teil entlang der optischen Fasern (201, 202) gestreckt wird, wobei diese Belastung nach dem Aushärten des flüssigen Mediums unterbrochen wird, woraus sich eine Vorspannung ergibt.

9. Verfahren nach Anspruch 8, dadurch gekennzeichnet, dass die die Streckung des Teiles (208) bewirkende Belastung in einer Wölbung des genannten Teiles besteht.

10. Verfahren nach Anspruch 9, dadurch gekennzeichnet, dass die Wölbung des Teiles (208) dadurch bewerkstelligt wird, dass eine für die Aufnahme der optischen Fasern (201, 202) bestimmte Fläche (280) des Teiles (208) in Auflage auf einer konkaven Fläche des Trägerblockes (204) gehalten wird.

11. Verfahren nach Anspruch 10, dadurch gekennzeichnet, dass die konkave Fläche (240) durch Verformung des Trägerblockes (204) beim Andrücken des Verbindungsteils (208) erzielt wird.

12. Verfahren nach einem der Ansprüche 10 und 11, dadurch gekennzeichnet, dass die Aufrechterhaltung des Andrucks in einem zentralen Bereich des Teiles (208) erfolgt.

13. Verfahren nach einem der Ansprüche 10 bis 12, dadurch gekennzeichnet, dass der Trägerblock (204) durch eine Lichtquelle beleuchtet wird.

14. Verfahren nach einem der vorstehenden Ansprüche 8 bis 13, dadurch gekennzeichnet, dass beim Verkleben ein mit dem flüssigen Medium angefüllter freier Raum (203) zwischen den Enden (211, 212) der Fasern (201, 202) entsteht.

15. Verfahren nach Anspruch 14, dadurch gekennzeichnet, dass der freie Raum eine Längserstreckung aufweist, die zwischen einem Zehntel und der Hälfte des Durchmessers der optischen Fasern (201, 202) gewählt wird.

16. Verfahren nach einem der vorstehenden Ansprüche 14 und 15, dadurch gekennzeichnet, dass die Enden (211, 212) der zu verbindenden optischen Fasern (201, 202) zunächst miteinander in Kontakt gebracht und anschliessend voneinander getrennt werden, um den freien Raum (203) mit der gewählten Länge zu erhalten.

17. Verfahren nach einem der Ansprüche 1 bis 16, dadurch gekennzeichnet, dass das flüssige, aushärtbare, transparente Medium einen Kennzahladapter bildet.

**Claims**

1. A method of connecting optical fibers, the method comprising a preliminary step of preparing at least two optical fibers for connection and a subsequent step of connecting the two optical fibers by means of a grooved block, the method being characterized by the following steps:

a) inserting the ends (11, 12) of at least two fibers (1, 2) to be connected end-to-end into a groove (5) filled with a transparent settable liquid medium and provided in a surface (40) of a support block (4) which, at least at said surface, is made of a material which is softer than the fibers and which is elastically deformable, the liquid medium not adhering to the soft material once the liquid medium has set, and simultaneously maintaining a rigid part (8) having a polished surface pressed against said surface (40) of the support, thereby exerting pressure on said fibers giving rise to a radial reaction of the wall of the groove against the fibers and thus aligning the fibers;

b) causing said liquid medium to set; and

c) separating the part (8) from the support block, the part (8) coming away from the support block together with the two fibers operatively interconnected by gluing.

2. A method according to claim 1, characterized in that the transparent medium sets when irradiated by irradiation to which the support block or the part is transparent, and in particular ultraviolet radiation.

3. A method according to any preceding claim, characterized in that the support block (4) is generally prismatic in shape having a generator line which is substantially parallel to the groove direction.

4. A method according to any one of claims 1 to 3, characterized in that the groove (5) includes a middle portion having a right cross-section suitable for receiving a prepared optical fiber, and having two end portions (61, 62) at either end thereof and in alignment the end thereof and in alignment therewith, said end portions having a larger right cross-section adapted to the dimensions of the fiber together with its protective covering.

5. A method according to claim 4, characterized in that the free ends (71, 72) of the end portions of the groove are shaped as flared openings.

6. A method acccording to any one of claims 1 to 5, characterized in that the groove has a V-shaped cross-section.

7. A method according to any preceding claim, characterized in that the support block includes a multiplicity of grooves.

8. A method according to any preceding claim, characterized in that the part (208) is subjected, during gluing, to forces suitable for stretching the part along the fibers (201, 202), said force being removed after the liquid medium has set, thereby prestressing the connections.

9. A method according to claim 8, characterized in that the forces stretching the part (208) consist in bending said part.

10. A method according to claim 9, characterized in that the part (208) is bent by maintaining a surface (280) of the part (208) which is to receive the optical fibers (201, 202) pressed against a concave surface of the support block (204).

11. A method according to claim 10, characterized in that the concave surface (240) is obtained by deforming the support (204) while maintaining the link part (208) pressed thereagainst.

12. A method according to claim 10 or 11, characterized in that the part (208) is pressed in a middle portion thereof.

13. A method according to any one of claims 10 to 12, characterized in that the support block (204) is illuminated by a light source.

14. A method according to any one of claims 8 to 13, characterized in that, during gluing, a gap (203) filled with the liquid medium is provided between the ends (211, 212) of the fibers (201, 202).

15. A method according to claim 14, characterized in that the length of the gap is chosen to be between one tenth and one half of the diameter of the optical fibers (201, 202).

16. A method according to claim 14 or 15, characterized in that the ends (211, 212) of the optical fibers (201, 202) to be connected are initially put into contact and are then separated in order to obtain the gap (203) of chosen length.

17. A method according to any one of claims 1 to 16, characterized in that the transparent settable liquid medium constitutes an index-matching medium.

FIG.1

FIG. 2

FIG. 3

FIG. 4

FIG. 5

FIG. 6

FIG. 7

FIG.8

FIG. 9

FIG. 10

FIG. 11

FIG. 12

## FIG.13

201  211  203  221  202

F  F

208

## FIG.14

201  211  221  202

G  G

208

FIG.15

272  240

204

280  205  262

261

271

## FIG.16

208  211  P  221  202

272

201  203

271

204  291

FIG.17

FIG.18

294

292

294

290

204

302

FIG.19

221

211

208

313

201

313 312

312

310

202